# EUROPÄISCHE PATENTANMELDUNG

(11) **EP 1 006 329 A1**
(43) Veröffentlichungstag der Anmeldung: **07.06.2000**
(21) Anmeldenummer: 98122822.4
(22) Anmeldetag: 01.12.1998
(51) Int. Cl.: F26B 21/12

(54) **Verfahren zum Trocknen von Kunststoffrohstoffen und Verfahren zum Regenerieren des Trocknungsmediums**

(71) Anmelder: digicolor GmbH, 33609 Bielefeld (DE)
(72) Erfinder: Soldato, Michael, 32120 Hiddenhausen (DE)
(74) Vertreter: TER MEER STEINMEISTER & PARTNER GbR

(57) **Zusammenfassung**

Bei einem Verfahren zum Trocknen von Kunststoffrohstoffen mit Hilfe eines gasförmigen Trocknungsmediums läßt sich die Effizienz dadurch steigern, daß die Strömung des Trocknungsmediums gepulst wird. Entsprechend läßt sich die Effizienz auch beim Regenerieren des Trocknungsmediums steigern, indem man es gepulst durch ein Regenerationsmittel strömen läßt.

## Beschreibung

Die Erfindung betrifft ein Verfahren zum Trocknen von Kunststoffrohstoffen, bei dem man ein gasförmiges Trocknungsmedium durch das Trocknungsgut strömen läßt. Ebenso bezieht sich die Erfindung auf ein Verfahren zum Regenerieren des Trocknungsmediums, bei dem man das Trocknungsmedium durch ein Regenerationsmittel strömen läßt.

In der kunststoffverarbeitenden Industrie werden die zumeist als Granulat vorliegenden Kunststoffrohstoffe vor der Weiterverarbeitung getrocknet. Zu diesem Zweck läßt man heiße Trockenluft, die als Trocknungsmedium dient, durch einen Trocknungsbehälter strömen, der das Granulat in loser Schüttung aufnimmt. Zumeist ist der Trocknungsbehälter als Trichter ausgebildet, aus dem das Granulat nach und nach in einen Plastifizierer abgegeben wird. Die heiße Trocknungsluft wird mit Hilfe eines Gebläses in den Trocknungsbehälter eingeleitet, so daß sie durch die Zwischenräume zwischen den Granulat-Partikeln hindurchdringt und somit diese Partikel intensiv umströmt. Dabei wird Wärme von der Trocknungsluft auf das Granulat abgegeben und gleichzeitig Feuchtigkeit von dem Granulat aufgenommen und mit der Trocknungsluft abgeführt. Die mit Feuchtigkeit beladene Trocknungsluft wird dann zumeist in einem separaten Prozeß regeneriert und dann in einem geschlossenen Kreislauf wieder dem Trocknungsbehälter oder den Trocknungsbehältern zugeführt. Bei dem Regenerationsprozeß strömt das Trocknungsmedium durch ein Regenerationsmittel, beispielsweise ein sogenanntes Molekularsieb, durch das die in der Trocknungsluft enthaltene Feuchtigkeit adsorbiert und/oder chemisch gebunden wird.

Aufgabe der Erfindung ist es, die Effizienz des Trocknungs- und/oder des Regenerationsprozesses zu steigern.

Diese Aufgabe wird erfindungsgemäß dadurch gelöst, daß die Strömung des Trocknungsmediums gepulst wird.

Unter einer gepulsten Strömung soll in diesem Zusammenhang eine Strömung verstanden werden, bei der die Strömungsgeschwindigkeit, mit der das Medium das Trocknungsgut bzw. das Regenerationsmittel umströmt, nicht zeitlich konstant gehalten, sondern impulsförmig moduliert wird.

Diese Maßnahme hat den Effekt, daß sich in dem Trocknungsgut bzw. dem Regenerationsmittel keine stationäre Strömung ausbildet, sondern sich ständig wechselnde Strömungsverhältnisse ergeben. Hierdurch wird der Austausch von Wärme und Feuchtigkeit zwischen dem Trocknungsmedium und dem Trocknungsgut bzw. Regenerationsmittel effizienter, so daß die Trocknungs- oder Regenerationsanlagen bei gegebener Leistung kleiner ausgebildet sein können und/oder im zeitlichen Mittel der Durchsatz des Trocknungsmediums und damit der erforderliche Energieeinsatz für die Heizung und Umwälzung des Mediums verringert werden kann. Darüber hinaus wird im Fall des Trocknungsverfahrens eine gleichmäßigere Trocknung des Granulats erreicht.

Die Wirkungsweise der Erfindung wird im folgenden anhand des Trocknungsverfahrens erläutert. Diese Erläuterungen gelten jedoch sinngemäß auch für das Regenerationsverfahren.

In den Impulspausen ist die Strömungsgeschwindigkeit des Trocknungsmediums relativ gering oder gleich null, so daß sich eine lange Verweilzeit des Trocknungsmediums an der Oberfläche des Trocknungsgutes ergibt. Hierdurch wird ein intensiver Austausch von Wärme und Feuchtigkeit erreicht. Dabei kommt es allerdings in den oberflächennahen Schichten des Trocknungsmediums zu einer Abkühlung und zu einer Zunahme des Feuchtigkeitsgehalts bis hin zur Sättigung. Während der nachfolgenden Impulsperiode wird dann aufgrund der höheren Strömungsgeschwindigkeit das kühle und feuchtigkeitsgesättigte Strömungsmedium rasch entfernt und durch unverbrauchtes Medium ersetzt, so daß in der nachfolgenden Impulspause die Austauschprozesse an den Oberflächen wieder mit hoher Intensität ablaufen. Gegebenenfalls kann es zusätzlich bei der stoßweisen Zufuhr des Trocknungsmediums auch zu einer gewissen Umschichtung des Granulats kommen, so daß das Trocknungsmedium auch diejenigen Oberflächenbereiche der Partikel erreichen kann, die zuvor mit den angrenzenden Partikeln in Berührung gestanden haben.

Vorteilhafte Ausgestaltungen der Erfindung ergeben sich aus den Unteransprüchen.

Ein besonders vorteilhafter Effekt der Erfindung wird darin gesehen, daß es infolge der gepulsten Strömung zu einem ständigen Wechsel zwischen laminarer und turbulenter Strömung in den Zwischenräumen zwischen den Trocknungsgut-Partikeln kommt. Bei niedriger Strömungsgeschwindigkeit in den Impulspausen oder in den ansteigenden und abfallenden Flanken der Impulse wird laminare Strömung vorherrschen, mit entsprechend langer Verweildauer der Luftmoleküle oder, allgemeiner, der Moleküle des Trocknungsmediums an der Oberfläche des Trocknungsgutes. Während der Impulsspitzen wird dagegen turbulente Strömung vorherrschen, so daß der Stoff- und Wärmetransport in die oberflächenferneren Schichten des Trocknungsmediums nicht durch Diffusion bzw. Wärmeleitung, sondern weitaus effizienter durch Konvektion erfolgt.

Die Modulation der Strömung kann unterschiedliche Muster aufweisen. Beispielsweise ist eine Modulation in der Form von Rechteckimpulsen denkbar, bei der der Durchsatz des Mediums durch den Trocknungsbehälter und damit die Strömungsgeschwindigkeit des Trocknungsmediums sprunghaft zwischen einem hohen Wert innerhalb der Impulse und einem niedrigen Wert in den Impulspausen wechselt, wobei der niedrige Wert in den Impulspausen auch null sein kann. Ebenso ist jedoch auch eine trapezförmige, dreieckförmige, sinusförmige oder sägezahnförmige Modulation der Strömung denkbar. Auch das Verhältnis zwischen den Dauern der einzelnen Impulse und den Dauern der dazwischenliegenden Impulspausen kann in weitem Bereich variiert werden. Kurze und entsprechend intensivere Impulse haben den Vorteil, daß sie eher zu einer Umschichtung des Trocknungsgutes beitragen.

Die verschiedenen Modulationsmuster der gepulsten Strömung können auf sehr unterschiedliche Weise erzeugt werden, beispielsweise durch Öffnen und Schließen von Ventilen, Ein- und Ausschalten von Gebläsen, durch den Einsatz taktweise arbeitender Pumpen, durch den Einsatz von Niederfrequenz-Schallgeneratoren (Infraschall) und dergleichen. Beispielsweise lassen sich durch das intervallweise Ein- und Ausschalten von Gebläsen dreiecks- oder sinusförmige Modulationsmuster erreichen. Durch die Kombination von stetig fördernden Gebläsen oder Pumpen mit Sperrventilen und vorzugsweise mit einem Kompressionsvolumen stromaufwärts des Sperrventils lassen sich Impulsstöße erzeugen, bei denen die Strömungsgeschwindigkeit beim Öffnen des Ventils abrupt ansteigt und dann, während sich das Trocknungsmedium im Kompressionsvolumen entspannt, allmählich wieder absinkt, bis das Ventil wieder geschlossen wird.

Da in der Praxis häufig mehrere Trocknungsbehälter parallel mit Trocknungsluft beschickt werden, ist es auch möglich, die Modulation der Strömungen in den einzelnen Trocknungsbehältern dadurch zu bewirken, daß die Zufuhr der Trocknungsluft oder zumindest eines Teils der Trocknungsluft periodisch zwischen den verschiedenen Trocknungsbehältern umgeschaltet wird. Dieses Verfahren hat den Vorteil, daß zwar die Strömung innerhalb jedes einzelnen Trocknungsbehälters gepulst wird, dennoch aber die Gebläse oder sonstigen Fördereinrichtungen, die die Gesamtheit der Trocknungsbehälter mit Trocknungsluft versorgen, mit konstanter oder annähernd konstanter Leistung betrieben werden können und somit nicht auf besonders hohe Spitzenlasten ausgelegt zu werden brauchen.

Wenn das Trocknungsmedium in einem geschlossenen Kreislauf zwischen den Trocknungsbehältern und den Regenerationsbehältern zirkuliert, so läßt sich durch die Modulation der Strömung erreichen, daß sich nicht nur in dem Trocknungsbehälter oder den Trocknungsbehältern, sondern auch in den Regenerationsbehältern eine gepulste Strömung ergibt. In diesem Fall wird zur gleichzeitigen Durchführung des erfindungsgemäßen Trocknungsverfahrens und des erfindungsgemäßen Regenerationsverfahrens nur eine einzige Modulationseinrichtung benötigt.

Im folgenden werden Ausführungsbeispiele der Erfindung anhand der Zeichnung näher erläutert.

Es zeigen:
- Fig. 1: ein Blockdiagramm einer Trocknungsanlage mit zwei Trocknungsbehältern, die zur Durchführung des erfindungsgemäßen Verfahrens ausgebildet ist; und
- Fig. 2: ein Blockdiagramm einer Trocknungsanlage mit einem Trocknungsbehälter und einem Regenerationsbehälter.

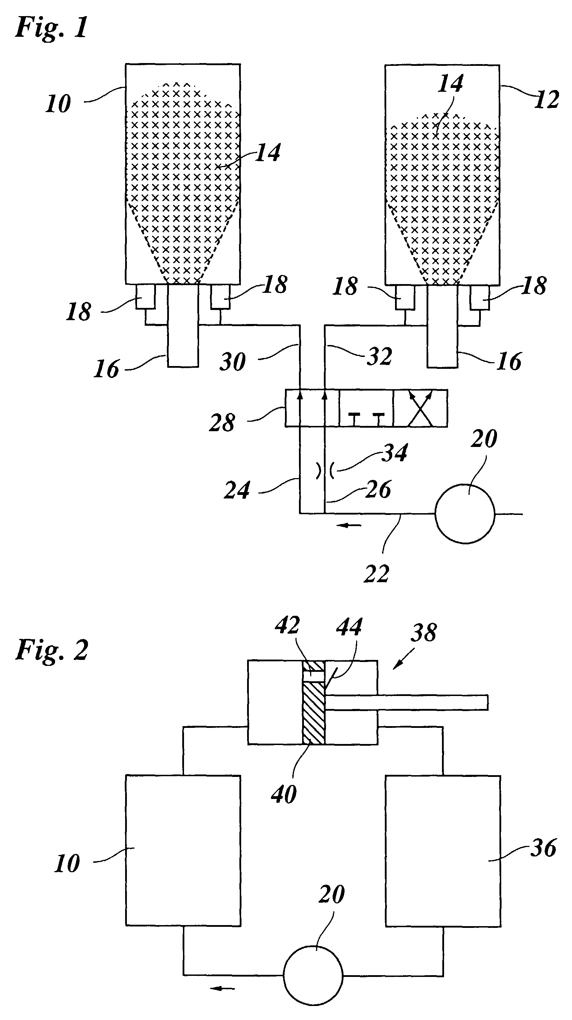

In Figur 1 sind zwei trichterförmige Trocknungsbehälter 10 und 12 gezeigt, die in bekannter Weise von oben mit Kunststoffgranulat 14 beschickt werden und aus denen das getrocknete Granulat jeweils über einen Auslauf 16 an einen nicht gezeigten Plastifizierer oder eine andere Weiterverarbeitungseinrichtung abgegeben wird. Jeder Trocknungsbehälter hat im unteren Bereich eine Anzahl von Anschlüssen 18, über die heiße Trocknungsluft derart zugeführt wird, daß sie das in loser Schüttung in dem Behälter enthaltene Granulat 14 gleichmäßig durchströmt.

Die Trocknungsluft wird mit Hilfe eines Gebläses 20 über eine Leitung 22 zugeführt, die sich in zwei Leitungen 24, 26 verzweigt. Die Leitungen 24 und 26 sind über ein Umschaltventil 28 mit Leitungen 30 und 32 verbunden, die jeweils zu einem der Trocknungsbehälter 10, 12 führen. Von den beiden Leitungen 24 und 26 stromaufwärts des Umschaltventils 28 enthält nur die Leitung 26 eine Drossel 34. In der In Figur 1 gezeigten Schaltstellung des Umschaltventils 28 ist die ungedrosselte Leitung 24 über die Leitung 30 mit dem Trocknungsbehälter 10 verbunden, so daß sich in diesem Behälter ein hoher Trocknungsluftdurchsatz ergibt, während die gedrosselte Leitung 26 über die Leitung 32 mit dem Trocknungsbehälter 12 verbunden ist. Im Trocknungsbehälter 12 ergibt sich deshalb nur ein verminderter Strömungsdurchsatz. Wenn das Umschaltventil 28 in die entgegengesetzte Schaltstellung umgeschaltet wird, so wird die gedrosselte Leitung 26 mit der Leitung 30 und die ungedrosselte Leitung 24 mit der Leitung 32 verbunden. Durch periodisches Umschalten des Umschaltventils 28 lassen sich somit die Strömungsdurchsätze der Trocknungsluft durch die Trocknungsbehälter 10 und 12 abwechselnd zwischen hohem Durchsatz und niedrigem Durchsatz umschalten, so daß sich in beiden Trocknungsbehältern im Gegentakt gepulste Trocknungsluftströmungen ergeben. Der Gesamt-Strömungswiderstand, der von dem Gebläse 20 überwunden werden muß, bleibt dabei annähernd konstant.

Im gezeigten Beispiel weist das Umschaltventil 28 eine Zwischenstellung auf, die der beide Leitungen 24 und 26 gesperrt sind. Wenn das Ventil beim Umschalten für eine gewisse Zeit in dieser Zwischenstellung gehalten wird, so baut sich stromaufwärts des Ventils ein Überdruck auf, der sich dann beim Öffnen des Ventils schlagartig entspannt. Auf diese Weise läßt sich insbesondere in dem Trocknungsbehälter, der dann mit der ungedrosselten Leitung 24 verbunden ist, ein stoßweiser Anstieg der Trockungsluftströmung erreichen.

Das in Figur 1 illustrierte Prinzip läßt sich problemlos auf Anlagen mit mehr als zwei Trocknungsbehältern verallgemeinern.

Figur 2 zeigt schematisch eine Anlage mit einem Trocknungsbehälter 10 und einem Regenerationsbehälter 36, die in einem geschlossenen Kreislauf von Trocknungsluft durchströmt werden. Die Trocknungsluft wird mit Hilfe eines Gebläses 20 mit konstanter Leistung umgewälzt und dient zur Trocknung des Kunststoffgranulats in dem Trocknungsbehälter 10. In dem Regenerationsbehälter 36 strömt die Trocknungsluft in an sich bekannter Weise durch ein Regenerationsmittel, beispielsweise ein Molekularsieb, und wird dadurch von der im Trocknungsbehälter aufgenommenen Feuchtigkeit befreit und zugleich wieder auf die gewünschte Trocknungstemperatur erhitzt.

Zwischen dem Trocknungsbehälter 10 und dem Regenerationsbehälter 36 ist eine Modulationseinrichtung 38 angeordnet. Diese Modulationseinrichtung 38 ist im gezeigten Beispiel als Kolben-Zylinder-Einheit ausgebildet, deren Kolben 40 einen Durchlaß 42 und ein Rückschlagventil 44 aufweist.

Wenn der Kolben 40 in Ruhe ist oder sich in Figur 2 nach links bewegt, so ist das Rückschlagventil 44 geöffnet, und die Trocknungsluft wird mit mäßigem Durchsatz in dem System umgewälzt. Wenn der Kolben 40 jedoch mit relativ hoher Geschwindigkeit nach rechts in Figur 2 bewegt wird, so schließt das Rückschlagventil 44, und auf der Seite des Regenerationsbehälters 36 wird ein Überdruckimpuls erzeugt, während gleichzeitig auf der Seite des Trocknungsbehälters 10 ein Unterdruckimpuls erzeugt wird. Dadurch erhöht sich kurzfristig der Durchsatz der Trocknungsluft sowohl im Regenerationsbehälter 36 als auch im Trocknungsbehälter 10. Wenn der Kolben 40 das Ende seines Hubes erreicht hat, wird er langsam wieder zurückbewegt, bis ein neuer Zyklus beginnt. Auf diese Weise werden mit Hilfe der einzigen Modulationseinrichtung 38 gepulste Strömungen der Trocknungsluft im Trocknungsbehälter 10 und im Regenerationsbehälter 36 erzeugt.

## Patentansprüche

1. Verfahren zum Trocknen von Kunststoffrohstoffen, bei dem man ein gasförmiges Trocknungsmedium durch das Trocknungsgut (14) strömen läßt, dadurch **gekennzeichnet**, daß die Strömung des Trocknungsmediums gepulst wird.

2. Verfahren zum Regenerieren eines gasförmigen Trocknungsmediums, bei dem man das Trocknungsmedium durch ein Regenerationsmittel strömen läßt, dadurch **gekennzeichnet**, daß die Strömung des Trocknungsmediums gepulst wird.

3. Verfahren nach Anspruch 1 oder 2, dadurch **gekennzeichnet**, daß die Strömung des Trocknungsmediums zwischen turbulenter Strömung während der Impulsspitzen und laminarer Strömung während der Impulspausen und/oder -flanken wechselt.

4. Verfahren nach einem der vorstehenden Ansprüche, dadurch **gekennzeichnet**, daß einer kontinuierlichen Strömung des Trocknungsmediums eine gepulste Strömung überlagert wird.

5. Verfahren nach einem der vorstehenden Ansprüche, dadurch **gekennzeichnet**, daß die Strömungsimpulse durch abwechselndes Öffnen und Schließen oder Umsachalten eines Ventils (28) erzeugt werden.

6. Verfahren nach einem der Ansprüche 1 bis 4, bei dem mehrere Behälter (10, 12), die das Trocknungsgut (14) oder das Regenerationsmittel enthalten, aus einer gemeinsamen Quelle (20) mit dem Trocknungsmedium gespeist werden, dadurch **gekennzeichnet**, daß zumindest ein Teil des Trocknungsmediums nacheinander den verschiedenen Behältern (10, 12) zugeführt wird, um so Strömungsimpulse in den einzelnen Behältern zu erzeugen.

7. Verfahren nach einem der Ansprüche 1 bis 5, dadurch **gekennzeichnet**, daß man das Trocknungsmedium gepulst in einem geschlossenen Kreislauf durch mindestens einen Trocknungsbehälter (10) und mindestens einen Regenerationsbehälter (36) strömen läßt.
